# DEMANDE DE BREVET EUROPEEN

(11) **EP 2 147 738 A1**
(43) Date de publication de la demande: **27.01.2010**
(21) Numéro de dépôt: 09166488.8
(22) Date de dépôt: 27.07.2009
(51) Int. Cl.: B23K 26/03, G01J 5/60, G01N 21/84

(54) **Système de mesure et de contrôle pour un appareil d'usinage d'une pièce utilisant un laser employant une mesure pontuelle de la tempörature et une mesure bidimensionelle du rayonnement thermique**

(30) Priorité: 25.07.2008 RU 2008130836
(71) Demandeur: Ecole Nationale d'Ingénieurs de Saint Etienne, 42000 Saint Etienne (FR); Institut de Physique B.I. Stepanov de l'Academie Nationale des Sciences de Biélorussie, 220072 Minsk (BY)
(72) Inventeur: Chivel, Yuri Alexandrovich, Minsk (BY); Smurov, Igor, 42210 Boisset-Les-Montrond (FR); Laget, Bernard, 42800 Chateauneuf (FR); Doubenskaia, Maria, 42210 Boisset-Les-Montrond (FR)
(74) Mandataire: Delorme, Nicolas

(57) **Abrégé**

L'appareil (30) d'usinage d'une pièce comporte un laser et un dispositif de balayage et de focalisation (32) apte à diriger le faisceau (1) du laser en différents points successifs de la pièce (31).

Le système de mesure et de contrôle comprend :
- un premier dispositif optique (41) de mesure à distance de la température de la pièce (31) dans la zone d'impact du faisceau (1) du laser, au moyen des rayonnements thermiques émis par la pièce ;
- un deuxième dispositif optique (42) de mesure du champ bidimensionnel de rayonnement thermique émis par la surface de la pièce (31) en cours d'usinage (zone affectée thermiquement) ;

lesdits premier et deuxième dispositifs (41, 42) étant liés optiquement au dispositif de balayage et de focalisation (32) du laser.

## Description

La présente invention concerne un système de mesure et de contrôle pour un appareil d'usinage d'une pièce utilisant un laser.

L'invention vise notamment le soudage, le rechargement, ainsi que le frittage ou la fusion sélectif de poudre par laser (y compris avec l'utilisation de têtes de balayage galvaniques).

Par exemple, le frittage ou la fusion de poudre par laser consiste à fabriquer une pièce en trois dimensions à partir de poudre. La poudre est déposée en une couche fine qui est balayée par un faisceau laser déplacé au moyen d'un dispositif de balayage et de focalisation comportant des miroirs. Ceci provoque la fusion au moins partielle de la poudre dans les zones désirées, ce qui conduit à la formation d'une couche de la future pièce. L'opération est répétée couche par couche, une nouvelle couche formée se solidarisant à la couche précédente, jusqu'à la réalisation complète de la pièce.

Dans les zones balayées par le laser, la pièce en cours de fabrication (ou plus généralement d'usinage) voit sa température augmenter et émet un rayonnement dont l'intensité dépend de la température de ladite zone, selon la loi de Planck.

On connaît déjà des systèmes de mesure et de contrôle de tels procédés.

Le document WO 2007/147221 décrit ainsi un système qui comporte une caméra CCD ou CMOS équipée d'un objectif, et une photodiode, la caméra et la photodiode étant connectées optiquement avec le dispositif de balayage et de focalisation du laser.

La caméra permet de visualiser la pièce. La photodiode détecte le rayonnement thermique de la pièce, de façon globale, et fournit un signal intégré lié à la température, mais ne peut en aucun cas mesurer cette température.

L'insuffisance de ce système est le nombre restreint de paramètres mesurables du procédé. Or, la complexité des procédés d'usinage utilisant un laser impliquent, pour un contrôle satisfaisant de ces procédés, la mesure et le contrôle d'un grand nombre de paramètres.

En effet, de nombreux paramètres influent sur la qualité du procédé d'usinage, tels que : le diamètre de la zone d'impact du laser, la puissance du laser, la longueur d'onde du laser, le sens de balayage, la vitesse de déplacement du faisceau laser, l'épaisseur de la couche de poudre déposée (qui doit notamment être suffisante pour qu'on ait un bon recouvrement de la couche précédente), la taille et la nature des poudres, etc.

Un autre objectif est de pouvoir mesurer et contrôler au cours du procédé des paramètres tels que : l'état de surface de la pièce, la géométrie et les dimensions de la pièce.

Or, il est important de pouvoir contrôler ces différents paramètres avec des vitesses de mesure importantes afin de détecter rapidement un éventuel dysfonctionnement et de prendre les mesures correctives appropriées.

Dans le cas particulier du frittage / fusion de poudre par laser, la réalisation d'une pièce peut durer plusieurs heures, voire plusieurs jours. Ceci rend nécessaire le contrôle régulier du bon déroulement du procédé pour éviter de ne découvrir des défauts dans la pièce qu'à l'issue de la longue durée de fabrication. Or les systèmes connus ne permettent pas d'effectuer des mesures et contrôles suffisants. De plus, la fabrication de la pièce se déroule dans une enceinte fermée où les conditions sont agressives du fait de la présence de poudre, de la réflexion du faisceau laser, de la température élevée, etc. Les opérations de mesure et de contrôle s'en trouvent donc compliquées. Enfin, selon la nature de la poudre ainsi que la taille et la forme des particules, le réglage et l'optimisation des paramètres du procédé peuvent être différents. Les systèmes de mesure et de contrôle connus ne permettent pas de bien gérer ces différences.

La présente invention vise à remédier aux inconvénients mentionnés ci-dessus.

A cet effet, l'invention concerne un système de mesure et de contrôle pour un appareil d'usinage d'une pièce utilisant un laser, ledit appareil comportant une source laser et un dispositif de balayage et de focalisation apte à diriger le faisceau du laser en différents points successifs de la pièce, ce système comprenant :
- un premier dispositif optique de mesure à distance de la température de la pièce dans la zone d'impact du faisceau du laser, au moyen des rayonnements thermiques émis par la pièce ;
- un deuxième dispositif optique de mesure du champ bidimensionnel de rayonnement thermique émis par la surface de la pièce en cours d'usinage ;
lesdits premier et deuxième dispositifs étant liés optiquement au dispositif de balayage et de focalisation du laser.

Les premier et deuxième dispositifs sont agencés pour recevoir les rayonnements thermiques en provenance de la pièce.

Le premier dispositif permet une mesure précise de température quasiment en un point. De façon concrète, il peut s'agir d'une mesure de température moyenne dans une zone de faibles dimensions (typiquement la zone d'impact du laser possède un diamètre de l'ordre de 50 à 100 µm). Le deuxième dispositif permet une mesure moins précise mais plus globale, montrant une distribution spatiale en deux dimensions et donc les gradients de température à la surface de la pièce. Il mesure le champ de rayonnement thermique émis par la zone affectée thermiquement, autour de la zone d'impact du laser.

Ces deux mesures sont complémentaires et permettent de contrôler efficacement et très rapidement la qualité des opérations d'usinage. Ainsi, le système selon l'invention permet d'effectuer des mesures et des contrôles sur la pièce en cours d'usinage pour le suivi du déroulement du procédé d'usinage.

Par « usinage », on entend tous les procédés de travail d'une pièce au moyen d'un laser, non limités aux procédés consistant à enlever ou à ajouter de la matière. Ainsi, le terme « usinage » employé ici inclut la fabrication d'une pièce, le soudage, le rechargement, etc.

Selon une réalisation possible, le premier dispositif comprend un pyromètre travaillant à au moins deux longueurs d'onde avec des fenêtres spectrales étroites entre 50 et 100 nm, par exemple un pyromètre bi-chromatique.

Le pyromètre mesure l'intensité de la lumière émise par la pièce par rayonnement thermique, et peut voir l'évolution de la température d'un point dans le temps. Or, l'état de surface de la pièce peut modifier l'émissivité et donc la précision de la mesure. Cela est aussi vrai pour tous les obstacles présents sur le trajet optique. En réalisant des mesures de température à au moins deux longueurs d'ondes, il est possible de s'affranchir en partie de ces inconvénients et d'obtenir une mesure précise de la température. L'application des méthodes bi-chromatique ou multi-chromatique permet d'obtenir la température de la pièce en cours d'usinage.

Il peut par exemple s'agir d'un pyromètre bi-chromatique travaillant aux longueurs d'onde λ₁ voisine de 1,2 µm et λ₂ voisine de 1,3 µm.

En général, un pyromètre bi-chromatique basé sur un photodétecteur de Si a des longueurs d'onde inférieures à 1 µm, par exemple λ₁ voisine de 0,6 µm et λ₂ voisine de 0,9 µm. En variante, un pyromètre bi-chromatique basé sur un photodétecteur de InGaAr a des longueurs d'onde supérieures à 1 µm, par exemple λ₁ voisine de 1,1 µm et λ₂ voisine de 2,0 µm ou λ₂ voisine de 1,3 µm.

Selon une réalisation possible, le deuxième dispositif comprend une caméra CCD de mesure de rayonnement thermique travaillant à au moins deux longueurs d'onde. La caméra travaille par exemple aux longueurs d'onde inférieures à 1 µm, par exemple λ₃ voisine de 0,4 µm et λ₄ voisine de 0,95 µm, avec des fenêtres spectrales étroites entre 50 et 100 nm.

Le système peut en outre comprendre un dispositif de visualisation de la pièce, qui est lié optiquement au dispositif de balayage et de focalisation du laser, et qui comporte une caméra CCD de visualisation ainsi qu'un dispositif de traitement d'images apte à fournir des mesures d'état de surface de la pièce, de la géométrie et des dimensions de la pièce.

Le système peut en outre comprendre un dispositif d'illumination de la pièce, apte à améliorer l'image de la pièce donnée par la caméra CCD de visualisation, ledit dispositif d'illumination étant lié optiquement au dispositif de balayage et de focalisation du laser.

Le dispositif d'illumination de la pièce peut comprendre un laser à diode, de préférence à bande spectrale étroite, dans laquelle sera effectuée la visualisation par la caméra CCD. Ce laser à diode possède une longueur d'onde très éloignée de la longueur d'onde du laser d'usinage, afin d'éliminer le rayonnement réfléchi par ledit laser d'usinage. Le laser d'usinage est le laser principal, utilisé pour usiner la pièce.

De plus, le dispositif de visualisation de la pièce peut en outre comporter un filtre mobile entre :
- une première position, dans laquelle le filtre est interposé sur le trajet des rayonnements émis par la pièce et la caméra peut visualiser l'image de la zone d'impact du faisceau du laser sur la longueur d'onde du laser d'usinage ;
- et une deuxième position, dans laquelle le filtre est écarté du trajet des rayonnements émis par la pièce et la caméra peut visualiser l'image de la zone d'impact du faisceau du laser sur la longueur d'onde du laser à diode.

Dans la première position, la caméra permet de voir la répartition spatiale de l'intensité dans la zone d'impact du faisceau laser, tandis que dans la deuxième position, la caméra permet une simple visualisation de l'objet.

On décrit à présent, à titre d'exemple non limitatif, un mode de réalisation possible de l'invention, en référence aux figures annexées :

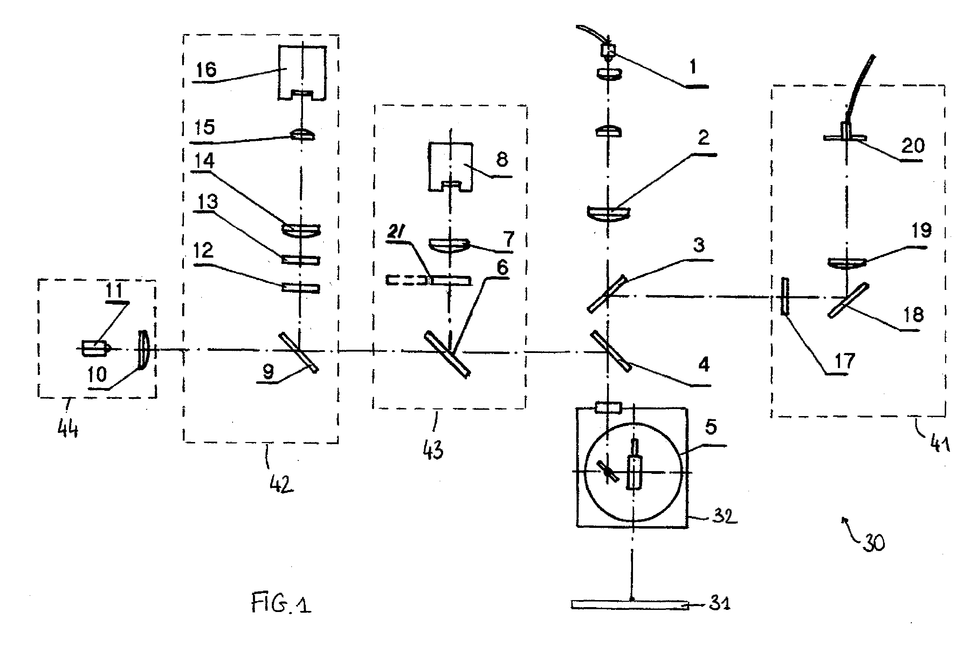

La figure 1 est une représentation schématique d'un système de mesure et de contrôle pour un appareil d'usinage d'une pièce utilisant un laser, selon l'invention.

La figure 1 représente un appareil d'usinage 30 d'une pièce 31 utilisant un laser. Cet appareil 30 comprend une source laser (non représentée) produisant un faisceau 1 dirigé, en passant par un télescope 2, et des miroirs dichroïques 3, 4, vers un dispositif de balayage et de focalisation 32 comprenant une tête de balayage avec un objectif 5.

Le dispositif de balayage et de focalisation 32 est commandé par une machine à commande numérique, et comprend des miroirs aptes à diriger le faisceau 1 du laser en différents points successifs de la pièce 31.

L'appareil 30 comprend de plus un système de mesure et de contrôle des opérations d'usinage de la pièce 31. Ce système comprend quatre dispositifs qui sont liés optiquement au dispositif de balayage et de focalisation 32, l'ensemble étant de préférence intégré dans le système optique de l'appareil 30 d'usinage par laser. Les trois premiers dispositifs reçoivent l'image de la zone de la pièce traitée par le laser et fournissent des informations qui sont reçues et traités par un dispositif de type ordinateur. Le quatrième dispositif est une source d'illumination de la pièce 31.

Le système selon l'invention comprend un premier dispositif optique 41 permettant la mesure à distance de la température de la pièce 31 dans la zone d'impact du faisceau du laser, au moyen des rayonnements thermiques émis par la pièce. Ce premier dispositif 41 comprend un pyromètre bi-chromatique 20 recevant les rayonnements de la pièce 31 transmises par des miroirs dichroïques 3 et 18, dans la bande spectrale de 0,6 à 0,9 pm ou 1,1 à 2 µm, par exemple. Le premier dispositif optique 41 comprend également un filtre de coupure 17 du rayonnement laser, pour protéger le pyromètre 20, et un objectif 19.

Le pyromètre 20 indique l'évolution de la température reconstruite à partir de la mesure de température de luminance. La taille de la zone de mesure du pyromètres est comparable avec le diamètre du faisceau laser. Par exemple, la zone de mesure du pyromètre est de 50 µm pour une tache focale de 70 µm.

Le système selon l'invention comprend un deuxième dispositif optique 42 de mesure du champ bidimensionnel de rayonnement thermique émis par la surface de la pièce 31 en cours d'usinage. Ce deuxième dispositif 42 comprend une caméra CCD 16 recevant les rayonnements de la pièce 31 qui sont transmises par le miroir dichroïque 9, des filtres 12, 13 et des objectifs 14, 15.

La caméra 16, qui détecte le rayonnement thermique de la pièce 31 pixel par pixel, permet d'obtenir une image surfacique du champ bidimensionnel de rayonnement thermique, c'est-à-dire du champ thermique de la pièce. La caméra CCD 16 visualise l'image sur la bande spectrale de 400 à 950 nm transmise par les filtres 12, 13.

Le système selon l'invention comprend un troisième dispositif optique 43 destiné à la visualisation de la pièce 31. Ce dispositif 43 comporte une caméra CCD 8, ainsi qu'un miroir dichroïque 6 et un objectif 7 qui assurent le lien optique entre la caméra CCD 8 et le dispositif de balayage et de focalisation 32 du laser. La caméra CCD 8 visualise l'image de la zone de la pièce 31 traitée par laser à l'aide d'un filtre 21 mobile et la distribution de flux d'énergie de la zone d'impact du laser.

Enfin, le système selon l'invention comprend un quatrième dispositif optique 44 destiné à l'illumination de la pièce 31, afin d'améliorer l'image de la pièce donnée par la caméra CCD 8. Ce dispositif d'illumination 44 comprend un laser à diode 11 à bande spectrale étroite connecté optiquement au dispositif de balayage et de focalisation 32 au moyen du miroir dichroïque 9 et d'un objectif 10.

Les objectifs 7, 14, 15, conjointement avec le dispositif de balayage et de focalisation 32 du laser et les miroirs dichroïques 6, 9, forment l'image de la zone de la pièce 31 traitée par le laser sur les matrices des caméras CCD 8, 16. Il est à noter qu'à l'aide du miroir dichroïque 6 et du filtre mobile 21, la caméra CCD 8 visualise l'image de la zone de traitement laser soit sur la longueur d'onde du laser principal soit sur la longueur d'onde du laser 11 à diode à bande spectrale étroite, avec une haute résolution spatiale et temporelle, par exemple d'environ 5 µm et 10 µs, respectivement. Les images enregistrées par les caméras CCD 8 et 16 sont traitées par l'ordinateur en temps réel. Les caméras CCD 8, 16 sont équipées d'obturateurs ce qui permet de sélectionner le temps de début et la durée d'enregistrement et, ainsi, d'identifier les paramètres d'un procédé industriel à la phase désirée de celui-ci.

La caméra 8, associée à un système de traitement de l'image, permet en outre de mesurer des dimensions et d'obtenir des indications sur la géométrie de la pièce. Ainsi, par exemple, il est possible de mesurer le diamètre et l'épaisseur d'une bague en cours d'usinage par laser, et de déterminer l'état de surface (rugosité, relief, etc.).

Ainsi, l'invention apporte une amélioration déterminante à la technique antérieure.

L'invention consiste à prévoir plusieurs dispositifs optiques complémentaires, intégrés dans l'appareil d'usinage, et qui de préférence travaillent simultanément, permettant d'effectuer des mesures avec une haute vitesse d'enregistrement.

Le système optique de mesure et de visualisation des processus thermiques dans la zone d'action du laser ou autour de cette zone (c'est-à-dire dans la zone affectée thermiquement) est combiné avec la visualisation dans les différentes échelles spatiale, temporelle et spectrale. Ce système utilise une source d'illumination externe et un procédé de traitement d'image qui permet de mesurer la géométrie, les dimensions et l'état de surface dans la zone d'action du laser ou de la pièce usinée par le laser. Le système est intégré dans la partie optique du dispositif de balayage et de focalisation, par lequel le faisceau laser est transporté jusqu'à la pièce.

Dans le cas d'un procédé de frittage/fusion de poudre par laser, l'invention permet notamment de visualiser la régularité de la couche de poudre déposée, de suivre l'avancement du procédé et son résultat couche par couche, de visualiser la distribution spatiale de rayonnement thermique (donc de la température) à deux longueurs d'onde ainsi que des profils de température sélectionnés, de calculer la température de couleur dans la zone affectée thermiquement par le faisceau laser et d'analyser rapidement d'éventuelles déviations par rapport à la température optimale.

Il va de soi que l'invention n'est pas limitée au mode de réalisation décrit ci-dessus à titre d'exemple mais qu'elle en embrasse au contraire toutes les variantes de réalisation.

## Revendications

1. Système de mesure et de contrôle pour un appareil d'usinage d'une pièce utilisant un laser, ledit appareil (30) comportant une source laser et un dispositif de balayage et de focalisation (32) apte à diriger le faisceau (1) du laser en différents points successifs de la pièce (31), **caractérisé en ce que** le système comprend :
- un premier dispositif optique (41) de mesure à distance de la température de la pièce (31) dans la zone d'impact du faisceau (1) du laser, au moyen des rayonnements thermiques émis par la pièce ;
- un deuxième dispositif optique (42) de mesure du champ bidimensionnel de rayonnement thermique émis par la surface de la pièce (31) en cours d'usinage ;
lesdits premier et deuxième dispositifs (41 , 42) étant liés optiquement au dispositif de balayage et de focalisation (32) du laser.

2. Système selon la revendication 1, **caractérisé en ce que** le premier dispositif (41) comprend un pyromètre (20) travaillant à au moins deux longueurs d'onde avec des fenêtres spectrales étroites entre 50 et 100 nm.

3. Système selon la revendication 2, **caractérisé en ce que** le pyromètre (20) est un pyromètre bi-chromatique basé sur un photodétecteur de Si travaillant aux longueurs d'onde inférieures à 1 µm, par exemple λ₁ voisine de 0,6 µm et λ₂ voisine de 0,9 µm.

4. Système selon la revendication 2, **caractérisé en ce que** le pyromètre (20) est un pyromètre bi-chromatique basé sur un photodétecteur de InGaAr travaillant aux longueurs d'onde supérieures à 1 µm, par exemple λ₁ voisine de 1,1 µm et λ₂ voisine de 2,0 µm.

5. Système selon l'une des revendications 1 à 4, **caractérisé en ce que** deuxième dispositif (42) comprend une caméra CCD (16) de mesure de rayonnement thermique travaillant à au moins deux longueurs d'onde.

6. Système selon la revendication 5, **caractérisé en ce que** la caméra CCD (16) de mesure de rayonnement thermique travaille aux longueurs d'onde inférieures à 1 µm, par exemple λ₃ voisine de 0,4 µm et λ₄ voisine de 0,95 µm avec des fenêtres spectrales étroites entre 50 et 100 nm.

7. Système selon l'une des revendications 1 à 6, **caractérisé en ce qu'**il comprend en outre un dispositif de visualisation (43) de la pièce (31), qui est lié optiquement au dispositif de balayage et de focalisation (32) du laser, et qui comporte une caméra CCD (8) de visualisation ainsi qu'un dispositif de traitement d'images apte à fournir des mesures d'état de surface de la pièce, de la géométrie et des dimensions de la pièce.

8. Système selon la revendication 7, **caractérisé en ce qu'**il comprend en outre un dispositif d'illumination (44) de la pièce (31), apte à améliorer l'image de la pièce donnée par la caméra CCD (8) de visualisation, ledit dispositif d'illumination (44) étant lié optiquement au dispositif de balayage et de focalisation (32) du laser.

9. Système selon la revendication 8, **caractérisé en ce que** le dispositif d'illumination (44) de la pièce comprend un laser à diode (11) possédant une longueur d'onde très éloignée de la longueur d'onde du laser d'usinage, afin d'éliminer le rayonnement réfléchi par ledit laser d'usinage.

10. Système selon la revendication 9, **caractérisé en ce que** le dispositif de visualisation (43) de la pièce comporte en outre un filtre (21) mobile entre :
- une première position, dans laquelle le filtre (21) est interposé sur le trajet des rayonnements émis par la pièce (31) et la caméra (8) peut visualiser l'image de la zone d'impact du faisceau du laser sur la longueur d'onde du laser d'usinage ;
- et une deuxième position, dans laquelle le filtre (21) est écarté du trajet des rayonnements émis par la pièce (31) et la caméra (8) peut visualiser l'image de la zone d'impact du faisceau du laser sur la longueur d'onde du laser à diode (11).
